# EUROPÄISCHE PATENTANMELDUNG

(11) **EP 0 924 496 A1**
(43) Veröffentlichungstag der Anmeldung: **23.06.1999**
(21) Anmeldenummer: 98123110.3
(22) Anmeldetag: 03.12.1998
(51) Int. Cl.: G01F 23/24, F01M 11/12

(54) **Ölstandssensor**

(30) Priorität: 20.12.1997 DE 19757065
(71) Anmelder: Bayerische Motoren Werke Aktiengesellschaft, 80788 München (DE)
(72) Erfinder: Hartmann, Volker, 82296 Schöngeising (DE); Kuhn, Joachim, 81247 München (DE)

(57) **Zusammenfassung**

Bei einem Ölstandssensor für Fahrzeuge, mit einem im Ölsumpf angeordneten Fühlelement und mit einem an einer Ölbehälterwand befestigten Sensorelektronik, die in elektrisch leiffähiger Verbindung mit dem Fühlelement steht, ist die Sensorelektronik innerhalb des Ölbehälters in guter wärmeleitender Verbindung mit der Ölbehälterwand angeordnet und gegenüber dem Ölsumpf durch eine Vergußmasse isoliert.

## Beschreibung

Die Erfindung bezieht sich auf einen Ölstandssensor mit den Merkmalen des Oberbegriffs von Patentanspruch 1.

Ein derartiger Ölstandssensor ist in Form eines thermischen Ölstandsgebers aus der Firmendruckschrift *Hella Technische Information* ,,Thermischer Ölstandsgeber TOG" bekannt. Dabei befindet sich die Sensorelektronik an der Außenseite der Ölbehälterwand. Zur Verbindung mit den Fühlelementen ist innerhalb der Ölbehälterwand eine größere Öffnung vorgesehen, in die das Gehäuse für das Fühlelement eingesetzt ist. Das Fühlelement selbst liegt im Ölsumpf und ist von Öl umspült. Bedingt durch diese Bauart ist es notwendig, einen hohen Aufwand zur Abdichtung des Ölbehälters zu treiben. Andererseits sitzt die Sensorelektronik an einer Stelle, die relativ weit vom Fühlelement entfernt ist und deren Temperatur durch die Kühlwirkung des Sensorelektronikgehäuses abhängig ist. Hinzu kommt die große mechanische Belastbarkeit für den Ölstandssensor aufgrund des außerhalb des Ölbehälters liegenden Sensorelektronikgehäuses.

Der Erfindung liegt die Aufgabe zugrunde, einen Ölstandssensor der eingangs genannten Art zu schaffen, der sich durch einen geringen Fertigungsaufwand bei deutlich verringerter mechanischer Belastung auszeichnet.

Die Erfindung löst diese Aufgabe durch die Merkmale des Patentanspruchs 1.

Die Sensorelektronik ist nunmehr wie das Fühlelement innerhalb des Ölbehälters angeordnet. Dadurch ist sie durch die Ölbehälterwand vor besonderer mechanischer Belastung gesichert. Auch die Temperatur der Sensorelektronik ist, bedingt durch die auf die Ölbehälterwand ausgeübte Kühlwirkung, überschaubar. Von besonderem Vorteil ist der geringe Herstellungsaufwand. Der Sensor besitzt kein eigenes Gehäuse. Er kann an der Ölbehälterwand vorgefertigt werden.

Die Verwendung von Vergußmasse in Verbindung mit einem Ölstandssensor ist im Prinzip aus der EP 0 399 686 B1 bekannt. Dabei wird das Fühlelement in einem durch Spritzgießen eines leiffähigen Harzes hergestellten zylindrischen hohlen Abschnitt angeordnet. Das Spritzgußteil besitzt dann lediglich eine mechanische Schutzfunktion für das Fühlelement und nicht, wie bei der Erfindung, eine thermische Isolationswirkung für die Sensorelektronik.

Vorteilhafte Weiterbildungen der Erfindung sind in den weiteren Patentansprüchen beschrieben und anhand der Zeichnung näher erläutert.

In der Zeichnung sind Ausführungsbeispiele der Erfindung dargestellt. Es zeigt
- Fig. 1: eine erste Ausführungsform eines erfindungsgemäßen Ölstandssensors
- Fig. 2 und 3: Alternativen zur Ausführungsform von Fig. 1.

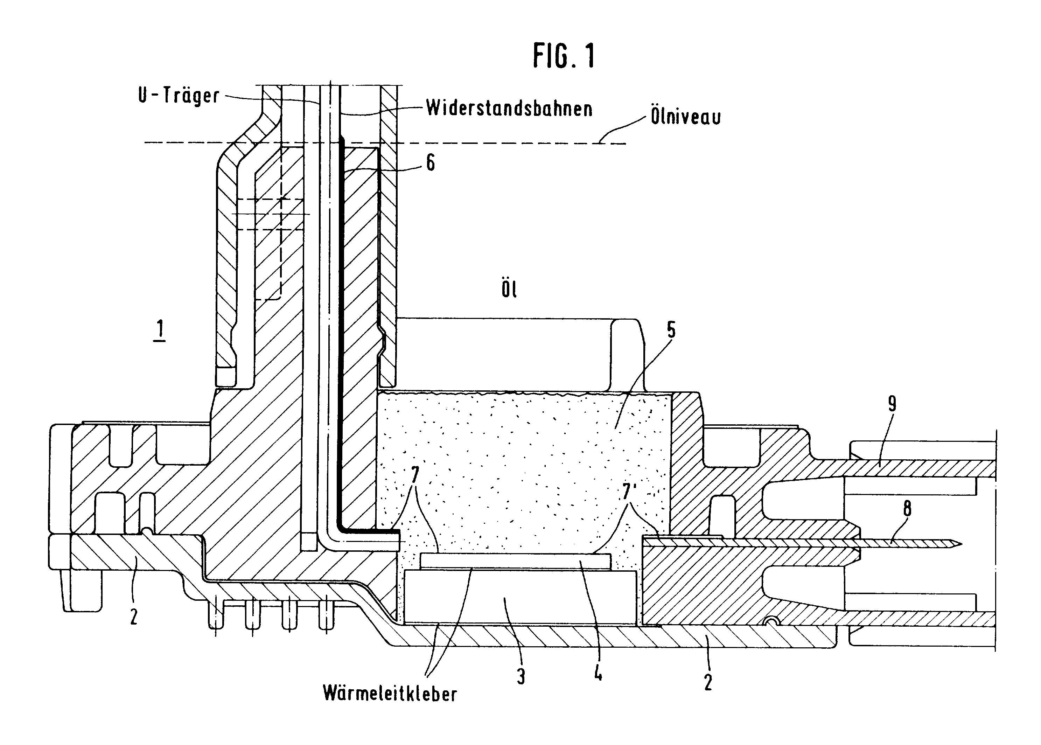

Der in Fig. 1 im Schnitt dargestellte Ölstandssensor 1 sitzt an der Unterseite einer Ölbehälterwand 2. Er besteht aus einem Kupferkörper 3 als Träger, einem Mikrochip 4 als Sensorelektronik, einem Vergußkörper 5 sowie einem Fühlelement 6. Der Mikrochip 4 enthält einen Mikrocontroller (nicht dargestellt, i.f. ebenfalls mit 4 bezeichnet). Mit Hilfe des Fühlelements 6 ist es möglich, den Füllstand kontinuierlich zu bestimmen und ein fühlstandsproportionales Meßsignal zu liefern.

Zur elektrischen Verbindung zwischen dem Fühlelement 6 und dem Mikrocontroller 4 dienen Bonddrähte 7. Zur elektrischen Verbindung des Mikrocontrollers 4 mit dem Bordnetz dienen Steckkontakte 8, die in einem Isoliergehäuse 9 angeordnet sind. Das Gehäuse 9 sitzt in einer Ausnehmung der Ölbehälterwand 2. Die Steckkontaktelemente 8 sind ebenfalls über Bonddrähte 7' mit dem Mikrocontroller 4 verbunden.

Zur mechanischen Verbindung des Mikrocontrollers 4 mit dem Kupferkörper 3 und des Kupferkörpers 3 mit dem Ölbehälter 2 dient ein Wärmeleitkleber (nicht dargestellt), der an der Kontaktfläche zwischen den beiden aufeinander liegenden Teilen aufgetragen ist.

Wesentlich für den dargestellten Aufbau des Ölstandssensor ist die Anordnung und Dimensionierung der Vergußmasse 5. Sie dient dazu, den Mikrocontroller 4 gegenüber dem Ölsumpf mechanisch und thermisch zu isolieren. Durch die Anordnung des Mikrocontrollers 4 auf dem Kupferkörper 3 sowie dem guten thermischen Kontakt des Kupferkörpers 3 mit der Ölbehälterwand 2 ist ein gleichbleibendes Temperaturgefälle zwischen dem sich im Ölsumpf befindlichen Öl und der Ölbehälterwand 2 eingestellt. Die am Mikrocontroller 4 herrschende Temperatur läßt sich dann so steuern, daß die thermische Belastung für den Mikrocontroller 4 unter der maximal möglichen liegt und daher eine thermische Gefährdung der Sensorelektronik verhindert wird.

Die Anordnung im Ölsumpf ermöglicht kurze elektrische Verbindungsleitungen zwischen der Sensorelektronik und den Fühlelementen sowie zwischen dem Mikrocontroller 4 und den Steckkontaktelementen. Durch den konstruktiv einfachen Aufbau lassen sich der Fertigungsaufwand verringern, die Ausfallsicherheit erhöhen sowie weitere Funktionen im Mikrocontroller 4 integrieren.

Der konstruktive Aufbau ist Voraussetzung, um einen Mikrokontroller überhaupt in diesem temperaturkritischen Einbauraum unterbringen zu können. Der Mikrokontroller kann dann z.B. die elektronische Steuerung des Sensors durchführen, eine Auswertung der gewonnenen Meßwerte ohne zwischengeschaltete Steuergeräte vornehmen und ermöglicht eine direkte Codierung der maßgeblichen Programme, Daten, Kennfelder usw. am Bandende. Auch besteht dann die Möglichkeit, ein selbstlernendes System zu realisieren, um Toleranzen einzuengen. Ebenso möglich ist ein Datenaustausch über einen integrierten CAN-Kontroller. Schließlich läßt sich ein nicht dargestellter Neigungsgeber integrieren. Seine Daten können wie auch die übrigen Daten mit dem Mikrokontroller ausgewertet, gespeichert und bei Bedarf ausgegeben werden. Der Sensor ist damit autark und unabhängig von anderen Steuergeräten. Es entsteht kein Prüfaufwand, wenn die Software und die Hardware in dem auswertenden Steuergerät geändert wird.

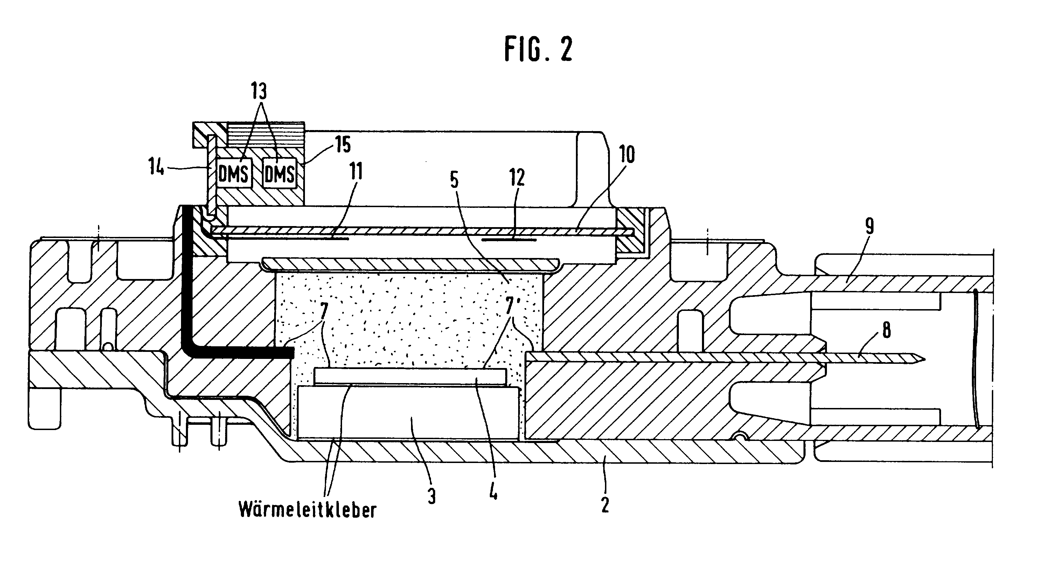

Beim Ausführungsbeispiel von Fig. 2 ist das Meßverfahren gegenüber dem von Fig. 1 unterschiedlich. Während in Fig. 1 ein Meßverfahren vorgesehen ist, wie es beim bekannten thermischen Ölstandsgeber bekannt ist, wird in Fig. 2 nunmehr die Möglichkeit eines Wägeverfahrens dargestellt. Dabei ist eine Membran 10 vorgesehen, die den Abschluß des Ölsumpfes bietet und die auf der dem Öl abgewandten Seite mit Dehnungsmeßstreifen 11 und 12 versehen ist. Das Ausgangssignal der Dehnungsmeßstreifen 11 und 12 wird ebenfalls mit Hilfe des Mikrocontrollers 4 ausgewertet. Damit läßt sich ebenfalls der Füllstand und damit der Ölvorrat bestimmen.

Ferner ist eine Möglichkeit gezeigt, mit Hilfe zweier Referenzmembrane 13, die mit Dehnungsmeßstreifen 14 und 15 versehen sind, eine Vollbrückenschaltung zu erzielen, die sich selbst abgleicht. Dadurch lassen sich z.B. Schmutzablagerungen auf der Membran 10 meßtechnisch kompensieren, da die Referenzmembrane 13 aufgrund ihrer senkrechten Anordnung außerhalb des Ölsumpfes frei von derartigen Ablagerungen bleiben..

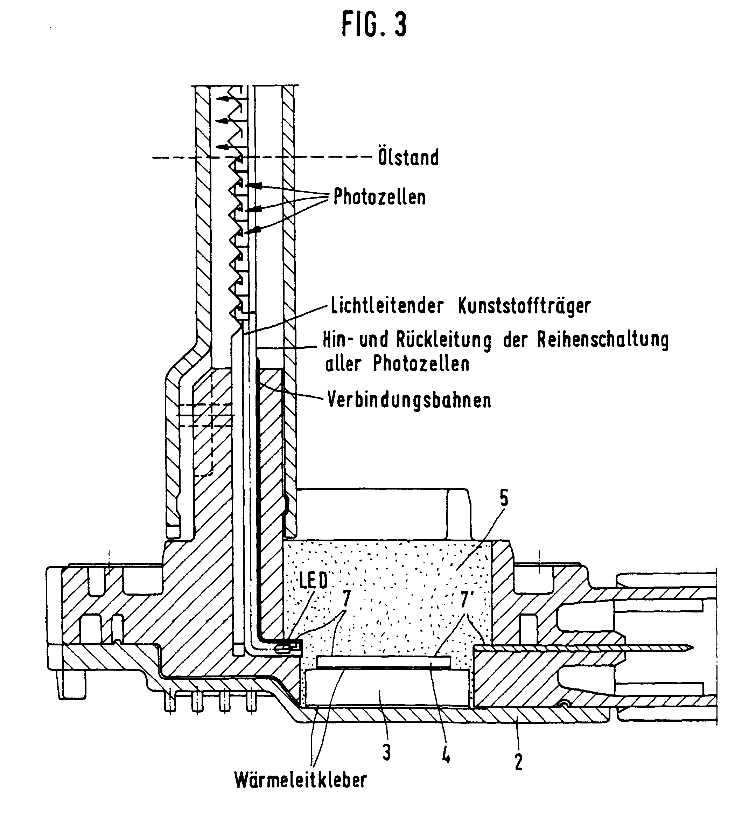

Beim Ausführungsbeispiel von Fig. 3 ist ein optisches Meßverfahren gezeigt, bei dem eine Kaskade von Photoelementen vertikal angeordnet ist. Anstelle von Photoelementen können auch Photowiderstände vorgesehen sein. Die Summe der Photospannungen bzw. Summenwiderstände ist ein Maß für den momentanen Ölstand im Motor und kann mit Hilfe des Mikrocontrollers 4 bestimmt werden. Im Gegensatz zu den Ausführungsbeispielen von Fig. 1 und 2 handelt es sich hier um ein digitales Verfahren. Das ausgegebene Meßsignal ändert sich nur in diskreten Schritten.

Bedingt durch die geringe Anzahl von Bauelementen sind bei sämtlichen Ausführungsbeispielen neben den bereits erwähnten verringerten Herstellungskosten die Summe der auftretenden Fertigungs- und Meßtoleranzen gering.

## Patentansprüche

1. Ölstandsensor für Fahrzeuge, mit einem im Ölsumpf angeordneten Fühlelement und mit einem an einer Ölbehälterwand befestigten Sensorelektronik, die in elektrisch leitfähiger Verbindung mit dem Fühlelement steht, **dadurch gekennzeichnet**, daß die Sensorelektronik innerhalb des Ölbehälters in guter wärmeleitender Verbindung mit der Ölbehälterwand angeordnet und gegenüber dem Ölsumpf durch eine Vergußmasse isoliert ist.

2. Ölstandsensor nach Anspruch 1, **dadurch gekennzeichnet**, daß zwischen der Sensorelektronik und der Ölbehälterwand ein Metallkörper angeordnet ist.

3. Ölstandsensor nach Anspruch 2, **dadurch gekennzeichnet**, daß der Metallkörper an der Ölbehälterwand und/oder die Sensorelektronik auf dem Metallkörper durch einen Wärmeleitkleber befestigt ist.

4. Ölstandsensor nach einem der Ansprüche 1 bis 3, **dadurch gekennzeichnet**, daß elektrische Anschlußkontaktstifte durch die Ölbehälterwand nach außen geführt sind.
